(19) Europäisches Patentamt / European Patent Office / Office européen des brevets

(11) **EP 1 816 503 B1**

(12) **EUROPEAN PATENT SPECIFICATION**

(45) Date of publication and mention
of the grant of the patent:
**08.11.2017 Bulletin 2017/45**

(51) Int Cl.:
**G02B 21/02** *(2006.01)*   **G02B 21/00** *(2006.01)*
**G02B 21/36** *(2006.01)*

(21) Application number: **05809517.5**

(22) Date of filing: **28.11.2005**

(86) International application number:
**PCT/JP2005/021829**

(87) International publication number:
**WO 2006/057393 (01.06.2006 Gazette 2006/22)**

(54) **LUMINESCENT SAMPLE IMAGING METHOD**

LUMINESZENZPROBENABBILDUNGSVERFAHREN

PROCÉDÉ D'IMAGERIE D'ÉCHANTILLON LUMINESCENT

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **26.11.2004 JP 2004342940
14.09.2005 JP 2005267531**

(43) Date of publication of application:
**08.08.2007 Bulletin 2007/32**

(73) Proprietor: **Olympus Corporation
Tokyo 192-8507 (JP)**

(72) Inventor: **SUZUKI, Hirobumi
Tokyo 192-8507 (JP)**

(74) Representative: **von Hellfeld, Axel
Wuesthoff & Wuesthoff
Patentanwälte PartG mbB
Schweigerstrasse 2
81541 München (DE)**

(56) References cited:
**EP-A1- 1 865 073      EP-A1- 1 930 717
EP-A2- 1 264 888      WO-A2-2005/096749
JP-A- 2001 021 812    JP-A- 2001 021 812
JP-A- 2002 369 690    JP-A- 2002 369 690
JP-A- 2004 245 979    US-A- 5 922 282
US-B1- 6 441 973**

**Description**

TECHNICAL FIELD

The present invention relates to a luminescent sample imaging method for imaging a luminescent sample.

BACKGROUND ART

Conventionally, in observation of a luminescent sample, measurement of luminescence intensity from the luminescent sample is conducted. For example, in observation of a cell into which luciferase gene is introduced, luminescence intensity from cell which is attributable to luciferase activity is measured to examine the intensity of expression of luciferase gene (concretely, expression level). Luminescence intensity from cell which is attributable to luciferase activity is measured in such a manner that first a cell lysate in which cells are lysed is caused to react with a substrate solution containing luciferin, ATP, magnesium and the like, and then luminescence intensity from the cell lysate reacted with the substrate solution is quantified by a luminometer using a photoelectron multiplier. That is, luminescence intensity is measured after lysis of cell. As a result, expression level of luciferase gene at a certain point of time is measurable by an average value of the entire cells.
Here, introduction of a luminescent gene such as luciferase gene into a cell as a reporter gene may be achieved, for example, by calcium phosphate method, lipofectin method, and electroporation method, and these methods are appropriately used depending on the purpose or the kind of cell. Further, in examining expression intensity of luciferase gene in a cell into which luciferase gene is introduced as a reporter gene, by luminescence intensity from the cell which is attributable to luciferase activity as an index, by linking a target DNA fragment on upstream or downstream side of luciferase gene to be introduced into a cell, the effect of the DNA fragment on transcription of luciferase gene can be examined; and by linking a transcription factor which is expected to influence on transcription of luciferase gene to be introduced to a cell, to an expression vector of the gene, and co-expressing the transcription factor with luciferase gene, the effect of a gene product of the gene on expression of luciferase gene can be examined.
Further, in order to chronologically measure expression level of luminescent gene, it is necessary to chronologically measure luminescence intensity from a living cell. And chronological measurement of luminescence intensity from a living cell is conducted in such a manner that an incubator for culturing cells is provided with a luminometer appliance serving as a spectrometer, and then luminescence intensity from the entire cell population being cultured is measured by the luminometer at constant time intervals. As a result, it is possible to measure expression rhythm having certain periodicity, and to measure chronological change in expression level of luminescent gene in the entire cells. On the other hand, when expression of luminescent gene is transient, large fluctuation arises in expression level in an individual cell. For example, even in cloned culture cells such as HeLa cells, response against drug via a receptor on surface of cell membrane may fluctuate among cells. Although spectrometry is a rapid method, the light intensity is enhanced as the number of cells in the container increases, so that it is difficult to distinguish expression level from the number of cells. Therefore, expression level according to the spectrometry is not reliable in terms of quantification. In other words, there is a possibility that several cells respond even when response is not detected for the entire cells. Therefore, when expression of luminescent gene is transient, it is important to chronologically measure luminescence intensity not from the entire cells but from an individual cell. Chronological measurement of luminescence intensity from an individual living cell using a microscope is conventionally conducted by long-time exposure to a cooling CCD camera at a level of liquid nitrogen temperature, or by using a CCD camera having an image intensifier and a photo-counting device because luminescence of an individual cell is very weak. In this manner, it is possible to measure chronological change in expression level of luminescent gene in an individual living cell.
By the way, in recent biological fields or medical researches, there is an increased need of chronological observation of dynamic change by an image for a living sample. To be more specific, in research fields using luminescence or fluorescence observation, time lapse and dynamic imaging are demanded for measuring dynamic functional expression of protein molecule in a sample. In the current state of art, dynamic change is observed by an image obtained from a fluorescent sample (for example, observation of dynamic image of a single protein molecule using fluorescence). In imaging of a fluorescent sample, since luminescence intensity from the fluorescent sample reduces with time by continuous irradiation with excitation light, it is difficult to chronologically capture a stable image which is available for quantitative evaluation, however, an image which is clear and has high spatial resolution can be obtained in short exposure time. On the other hand, in chronological observation of dynamic change by an image of luminescent sample, since luminescence from the luminescent sample is very weak, a CCD camera having an image intensifier is conventionally used in observation of luminescent sample. In imaging of luminescent sample, a stable image which is available for quantitative evaluation can be chronologically obtained because irradiation with excitation light is not required.
US 6,441,973 discloses an electronic imaging system for assessing the intensity of colorimetric, fluorescent, or luminescent signals in a matrix consisting of wells, microwells, hybridization dot blots on membranes, gels, or other specimens, including a sensitive CCD detector, and a telecentric lens with epi-illumination. The lens includes 39 surfaces and has a numerical aperture of 0,443 and a magnification of 0,25, with a focal length of 164.436 mm.

JP 2002/369690 discloses a fluorescent protein having a 46th phenylalanine residue substituted with a leucine residue in an amino acid sequence of the green fluorescent protein, the yellow fluorescent protein, or mutants thereof.

JP 2001-021812 discloses an objective lens for observing wide visual fields at a low magnification with sufficient brightness for observing fluorescence, having numerical apertures of 0,130 or 0,128 and ratios of numerical aperture to magnification of 0,65 or 0,64.

DISCLOSURE OF INVENTION

PROBLEM TO BE SOLVED BY THE INVENTION

However, in imaging of a luminescent sample of slight luminescent, since luminescence intensity from the luminescent sample is very weak, there is a problem that the exposure time required for capturing a clear image is extended. Further, since time interval of imaging is restricted by luminescence intensity per unit time, there is a problem that it is difficult to sequentially capture clear images at relatively short time intervals, such as 20 to 30 minutes, although it is possible to chronologically capture clear images at relatively long time intervals, for example, equal to or longer than 60 minutes, when a luminescent sample with slight luminescent is imaged. It is still more difficult to image a luminescent image at very short time intervals, for example, 5 to 10 minutes.

Therefore, it is beyond expectation to obtain a clear image in less than 5 minutes, for example, about 1 minute to 3 minutes. In general, the longer the time required for imaging, the less accurate the analysis of variation in expression level, and quantitative accuracy is deteriorated.

The present invention was devised in consideration of the above problems, and it is an object of the present invention to provide a luminescent sample imaging method for capturing a clear image in short exposure time, or even in real time from a luminescent sample with weak luminescence intensity.

MEANS FOR SOLVING PROBLEM

To solve the problems as described above and to achieve an object, a luminescent sample imaging method according to claim is provided. The luminescent sample imaging method is a luminescent sample imaging method for imaging a luminescent sample, wherein an objective lens having a value of $(NA/\beta)^2$ represented by numerical aperture(NA) and projection magnification ($\beta$) of equal to or more than 0.01 is used.

Further, the luminescent cell imaging method may be a luminescent cell imaging method for imaging luminescent cell into which luciferase gene is introduced, wherein an objective lens having a value of $(NA/\beta)^2$ represented by numerical aperture (NA) and projection magnification ($\beta$) of equal to or more than 0.01 is used.

EFFECT OF THE INVENTION

In the luminescent sample imaging method according to the present invention, an objective lens in which a value of $(NA/\beta)^2$ represented by numerical aperture(NA) and projection magnification ($\beta$) is equal to or more than 0.01 is used. This offers the effect that a clear image can be captured in short exposure time, or even in real time in luminescent samples exhibiting weak luminescence such as luminescent proteins (e.g., luminescent proteins expressed from introduced gene (e.g., luciferase gene)), luminescent cell or populations of luminescent cells, luminescent tissue sample, luminescent individual (e.g., animal or organ) and the like.

Further, in the luminescent sample imaging method according to the present invention, since an objective lens in which a value of $(NA \div \beta)^2$ represented by numerical aperture(NA) and projection magnification ($\beta$) is equal to or more than 0.01 is used, such an effect is offered that a clear image can be captured from a luminescent cell into which luciferase gene is introduced in short exposure time, or even in real time.

Further, in an objective lens, since a value of $(NA \div \beta)^2$ represented by numerical aperture(NA) and projection magnification ($\beta$) is equal to or more than 0.01, such an effect is offered that a clear image can be captured in short exposure time, or even in real time in luminescent samples exhibiting weak luminescence such as luminescent proteins (e.g., luminescent proteins expressed from introduced gene (e.g., luciferase gene)), luminescent cell or populations of luminescent cells, luminescent tissue sample, luminescent individual (e.g., animal or organ) and the like. Concretely, such an effect is offered that a clear image can be captured from a luminescent cell into which luciferase gene is introduced in short exposure time, or even in real time.

Further, in the objective lens, since larger numerical aperture and smaller magnification compared with a conventional objective lens are employed, it is possible to image a wide range with high resolution by using the objective lens. As a result, it is possible to image a moving luminescent sample or a luminescent sample distributing in a wide range.

Further, in the objective lens, a value of $(NA \div \beta)^2$ represented by numerical aperture(NA) and projection magnification ($\beta$) (e.g., equal to or more than 0.01) is indicated in any one of the objective lens and a packaging container (package) for packaging the objective lens or both. As a result, such an effect is offered that an observer of luminescent image, for example, is allowed to easily select an objective lens which is suited for imaging a luminescent sample in short exposure time, or even in real time by checking the indicated value of $(NA \div \beta)^2$.

Further, inventors of the present invention also found that different variation patterns of gene expression are observed in a plurality of cells cultured in a single Petri dish. We also found that according to the optical conditions that the present inventors examined, an image can be generated in one to five minutes when the objective lens of the imaging apparatus is selected to have an optical condition represented by square of NA/projection magnification ($\beta$) of equal to or more than 0.071, and a cell image which can be subjected to image analysis is provided. A luminescence analyzing system in which these luminescent images are microscopically observed by an accumulative-type imaging apparatus is hereinafter referred to as a luminescent microscope. Preferably, the luminescent microscope has shielding units having an opening/closing cap (or opening/closing window) for light shielding, and by opening/closing of these shielding units, a necessary biological sample can be set or replaced. Depending on the purpose, an operation of giving chemical or physical stimulation may be manually or automatically conducted on a container for accommodating a biological sample. In one best mode for carrying out the present invention described later, the luminescent microscope has a known or original culture apparatus. The culture apparatus has functions of keeping optimum temperature, humidity, pH, ingredient of external air, ingredient of culture medium, and ingredient of culture liquid to enable long-term analysis in the system.

BRIEF DESCRIPTION OF DRAWINGS

FIG. 1 is a view depicting one example of the composition of an apparatus for executing a luminescent sample imaging method according to the present invention;

FIG. 2 is a view depicting one example of an objective lens 2 in which value of $(NA/\beta)^2$ is indicated;

Fig. 3 is a schematic view of an objective lens;

Fig. 4 is a view depicting one example of brightness of image $(NA/\beta)^2$ by objective lens of a commonly used microscope which is commercially available at present;

Fig. 5 is a view depicting conditions for numerical aperture(NA) and projection magnification ($\beta$) of objective lens used in Example 1;

Fig. 6 is a view depicting conditions for numerical aperture(NA) and projection magnification ($\beta$) of objective lens used in Example 2;

Fig. 7 is a view depicting an image of HeLa cells captured in Example 2;

Fig. 8 is a view depicting conditions for numerical aperture(NA) of objective lens used in Example 3;

Fig. 9 is a view depicting an image of HeLa cells captured in Example 3;

Fig. 10 is a view depicting relationship between value of $(NA/\beta)^2$ of objective lens used in Example 3, and luminescent intensity of image shown in Fig. 9.

EXPLANATIONS OF LETTERS OR NUMERALS

1    Sample
2    Objective lens
3    Condenserlens
4    CCD camera
5    monitor

BEST MODE(S) FOR CARRYING OUT THE INVENTION

In the following, embodiments of a luminescent sample imaging method according to the present invention, a luminescent cell imaging method, and an objective lens will be specifically explained with reference to the attached drawings. It is to be noted that the present invention will not be limited by these embodiments.

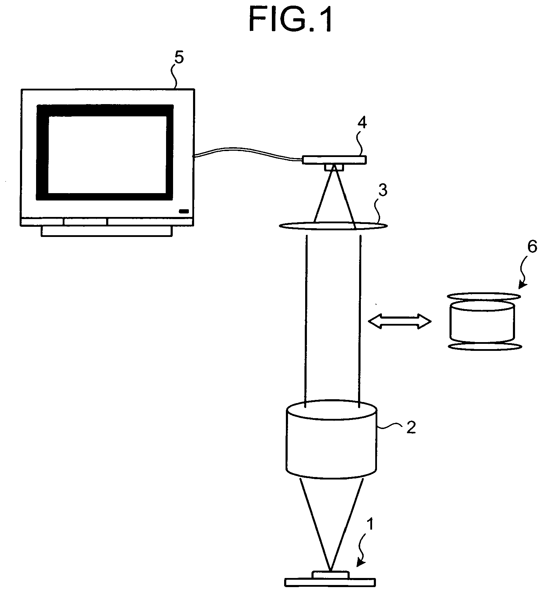

Referring to Fig. 1, the composition of an apparatus for executing a luminescent sample imaging method according to the present invention will be explained. Fig. 1 is a view depicting one example of the composition of an apparatus for executing a luminescent sample imaging method according to the present invention. As shown in Fig. 1, an apparatus for executing a luminescent sample imaging method according to the present invention is intended for imaging a sample which is a subject to be imaged in a short exposure time, or even in real time, and includes an objective lens 2, a condenser lens 3, a CCD camera 4 and a monitor 5. The apparatus may further include a zoom lens 6 as is illustrated in the drawing.

A sample 1 is a luminescent sample, and is, for example, luminescent protein (e.g., bioluminescent photoprotein expressed from transfected gene (luciferase gene, aequorin gene, pholasin gene or the like), luminescent cell, population of luminescent cells, luminescent tissue sample or luminescent individual (animal or the like) or the like. The sample 1 may be concretely a luminescent cell into which luciferase gene is introduced. Here, as a biological material which forms a base of luminescent sample, cells or tissues derived from eukaryotic animals or cyano bacteria can be exemplified. For medical use, a sample containing cells that are removed by biopsy from a site to be examined in mammalian, particularly in human being is particularly exemplified. In regeneration medicine, it is a biological sample which is at least partly modified or synthesized in artificial manner, and can be used for examining whether biological activity can be maintained well. In other aspect, a subject of assay in the present invention is not only cells or biological tissues derived from animals, but also cells or biological tissues derived from plants or insects. In bacteria and viruses, different parts in a container may become subjects of analysis which was disabled by a conventional luminometer. In a luminometer, by overlapping an uncountable number of samples (more than $10^6$ cells per one well, for example) in a container such as well or Petri dish, great luminescence intensity is rapidly obtained. In the present invention, since images of individual samples which are invisible to the naked eye are generated, individual cell or biological tissue may be analyzed even when the cells are accommodated in a container at such density that allows distinction of individual cells. Such individual analysis includes an analyzing technique that statistically summates or averages the cells that are emitting light. As a result, it is possible to provide accurate evaluation regarding interaction for a single cell. Further, it becomes possible to identify cell groups or tissue regions exhibiting similar luminescence intensity or luminescent pattern in a plurality of mixed luminescent samples. As a sample container for containing the sample 1, a Petri dish, glass slide, a microplate, a flow cell and the like can be exemplified. Here, it goes without saying that the bottom face of the container is formed of translucent material (e.g., glass, plastic), and a container having wide (or flat) bottom face is more preferred to facilitate obtaining of two-dimensional data. In a well or cuvette which is formed by integrating a plurality of container parts, preferably partitions of these container parts are entirely formed of a light shielding material or dye. A container having an open upper end such as Petri dish is preferably covered with a lid for preventing evaporation, and more preferably, film or color for preventing reflection is applied on the inner face of the lid to improve the S/N ratio. Alternative to such a solid lid, a liquid lid such as mineral oil may be placed on the top face of the sample in the container. A sample stage for placement of a sample container may be movable in the X axial direction and Y axial direction as normal microscope to allow change in imaging field as is necessary. The objective lens 2 has a value of $(NA \div \beta)^2$ represented by numerical aperture(NA) and projection magnification ($\beta$) of equal to or more than 0.01. The objective lens 2 may be arranged under the sample 1 in a inverted position. The objective lens 2 may be heated by an appropriate heating unit (Peltier element, hot air heater or the like) so that living luminescent sample can function in a stable manner in an incubation environment such as under culturing condition. The objective lens 2 may be adapted to be driven also in the Z axial direction which is the direction of optical axis (vertical direction in the drawing). A Z axis driving mechanism is provided for automatically driving the objective lens 2 along the Z axis (direction of optical axis). As the Z axis driving mechanism of the objective lens 2, a rack and pinion mechanism and a friction roller mechanism can be exemplified. The objective lens 2 may be appropriately an oil-immersion lens depending on the desired magnification. Selection of magnification is arbitrarily made depending on the size of the sample to be evaluated (or analyzed). Concretely, the magnification may be so low as cells or issues can be observed (e.g., 5 times to 20 times) or so high as micro substances inside or outside cell can be observed (e.g., 40 times to 100 times). The condenser lens 3 collects light through the objective lens 2 emitted from the sample 1. The CCD camera 4 is a cooling CCD camera at about 0°C, and captures an image of the sample 1 via, for example, the objective lens 2 and the condenser lens 3. The monitor 5 outputs an image captured by the CCD camera 4. Preferably, the monitor 5 provides an analysis method which observes change in activity concerning at least one desired cell by means of a real-time image by having a structure that displays image information of an luminescent sample by a moving image. This makes it possible to chronologically observe the state of affairs of luminescence per cell or per tissue with a lively and dynamic image.

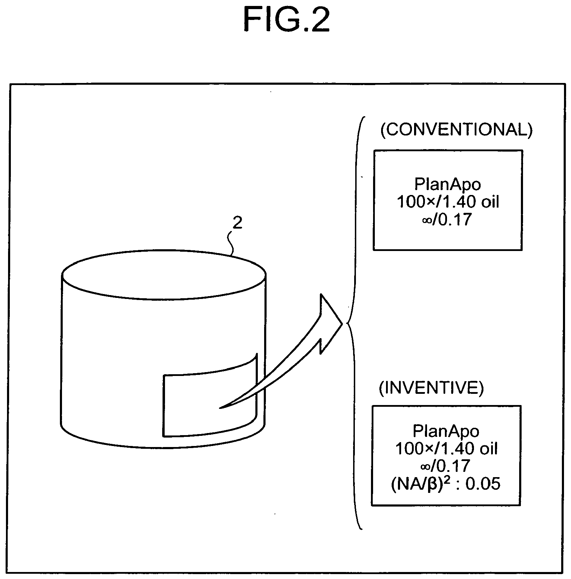

A values of $(NA/\beta)^2$ is indicated in the objective lens 2 or in a packaging container (package) of the objective lens 2. Now, one example of objective lens for which a value of $(NA/\beta)^2$ is indicated will be explained with reference to Fig. 2. Fig. 2 is a view depicting one example of objective lens 2 in which a value of $(NA/\beta)^2$ is indicated. In a conventional objective lens, kind of lens (e.g., "PlanApo"), magnification/NA oil immersion (e.g., "100×/1.40 oil") and infinity/thickness of cover glass (e.g., "∞/0.17") are indicated. On the other hand, in the objective lens (objective lens 2), opening angle of emergence (e.g., "$(NA/\beta)^2$:0.05") is indicated, as well as kind of lens (e.g., "PlanApo"), magnification/NA oil immersion (e.g., "100×/1.40 oil"), and infinity/thickness of cover glass (e.g., "∞/0.17").

As described above, in the apparatus for executing the luminescent sample imaging method according to the present invention, the objective lens 2 has a value of $(NA \div \beta)^2$ represented by numerical aperture(NA) and projection magnification ($\beta$) of equal to or more than 0.01. As a result, it is possible to capture a clear image in short exposure time, or even in real time in luminescent samples of weak luminescence intensity such as luminescent proteins (e.g., bioluminescent photoproteins expressed from introduced gene (e.g., luciferase gene)), luminescent cell or populations of luminescent cells, luminescent tissue sample, luminescent individual (e.g., animal or organ) and the like. To be more specific, it is possible to capture a clear image in a short exposure time, or even in real time from a luminescent cell into which luciferase gene is introduced as a subject to be imaged. Further, since the objective lens 2 has larger numerical aperture and smaller magnification than the conventional objective lens, it is possible to image a wide rage with high resolution using the objective lens 2. As a result, it is possible to select a livery luminescent sample, a moving luminescent sample, and a widely distributing luminescent sample as a subject to be imaged. Further, as for the objective lens 2, a value of $(NA \div \beta)^2$ (e.g., equal to or more than 0.01) represented by numerical aperture(NA) and projection magnification ($\beta$) is indicated in any one of the objective lens 2 and the package container (package) for packaging the objective lens 2 or both. As a result, a person who observes luminescent image can easily select an objective lens which is suited for imaging a luminescent sample in a short exposure time, or even in real time, for example, by checking the indicated value of $(NA \div \beta)^2$.

In a conventional reporter assay using luciferase gene, since luminescence intensity is measured after lysis of cells, only the expression level at a certain point of time is measured, and the measurement is obtained by an average value of the entire cells. Further, when the measurement is conducted during culturing, change in expression level for an individual cell can not be measured although chronological expression level of cell colony can be measured. To observe luminescence intensity from an individual cell under microscope, it is necessary to expose for a long time with a cooling CCD camera at the temperature level of liquid nitrogen, or conduct photo counting with a CCD camera having an image intensifier because luminescence from a living cell is extremely weak. This makes the camera for detecting luminescence expensive and bulky. However, by using the apparatus for executing the luminescent sample imaging method according to the present invention, in observing luminescence of an individual cell exhibiting activity of luciferase which is a reporter gene product under a microscope, it is possible to obtain a quantitative image using a cooling CCD camera of about 0°C not having an image intensified. In other words, since luminescence of an individual cell in living condition can be observed with a cooling CCD camera of about 0°C by using an apparatus for executing a luminescent sample imaging method according to the present invention, an image intensifier, and a device for photo counting are no longer needed. That is, it is possible to image a luminescent sample at low costs. Further, by using the apparatus for executing a luminescent sample imaging method according to the present invention, it is possible to chronologically observe luminescence of an individual living cell during culture, and to observe the luminescence in real time. Further, by using the apparatus for executing the luminescent sample imaging method according to the present invention, it is possible to monitor responses to drug or stimulation in different conditions in the same cell.

Here, in order to facilitate understandings of the luminescent sample imaging method, the luminescent cell imaging method and the objective lens, a conventional objective lens and observation of luminescent image using the lens will be briefly explained. Generally, spatial resolution ε in microscopic observation is shown by the Formula 1:

$$\varepsilon = 0.61 \times \lambda \div NA \qquad \text{(Formula 1)}$$

(in Formula 1, λ is wavelength of light, and NA is numerical aperture).

Diameter d of observation range is shown by the Formula 2:

$$d = D \div M \qquad \text{(Formula 2)}$$

(in Formula 2, D is number of fields of view and M is magnification. The number of fields of view is generally from 22 to 26.)

Conventionally, focal distance of objective lens for microscope is defined as 45 mm by international standard. Recently, an objective lens having a focal distance of 60 mm has been brought into use. A lens having large NA, or high spatial resolution designed assuming this focal distance has work distance (WD) of generally about 0.5 mm, and about 8 mm in the case of a long WD design. When such an objective lens is used, the observation range is about 0.5 mm in diameter.

In observation of cell group or tissue, or individuals dispersed in dish or glass bottom dish, the observation range sometimes spans one to several cm. When it is desired to observe such a range with high resolution, it is necessary to keep the NA to a large value while the magnification is low. In other words, since NA represents ratio between lens diameter and focal distance, the objective lens that is able to observe a wide range at such large NA should have low magnification. As a result, such objective lens has a large diameter. In manufacturing an objective lens with large diameter, generally, high precision is required in respect of uniformity of mechanical properties of optical materials, uniformity of coating, and shape of lens.

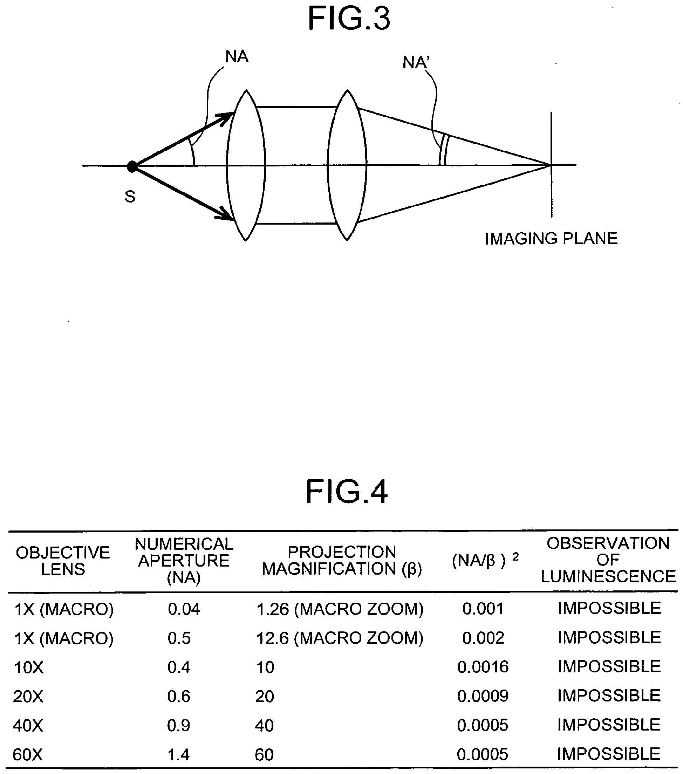

Further, in the case of microscopic observation, transmittance of optical system, numerical aperture of objective lens, projection magnification at tip face of CCD camera, performance of CCD camera and the like will largely influence on brightness of image. Brightness of image is evaluated by square of a value obtained by dividing numerical aperture(NA) by projection magnification ($\beta$), namely by $(NA/\beta)^2$. As shown in Fig. 3, in the objective lens, aperture angle of incidence NA and aperture angle of emergence NA' has a general relationship shown by the following Formula 3, wherein $NA'^2$ is a value showing brightness delivered to eyes of observer or a CCD camera.

$$NA'=NA\div\beta \qquad\qquad\qquad\qquad (Formula\ 3)$$

(in Formula 3, NA is aperture angle of incidence (numerical aperture), NA' is aperture angle of emergence, and $\beta$ is projection magnification).

In a commonly-used objective lens, NA' is no more than 0.04, and $NA'^2$ is 0.0016. We examined values of brightness $(NA/\beta)^2$ of image in an objective lens in a currently available general microscopy to reveal that they fall within the range of 0.0005 to 0.002 as shown in Fig. 4.

However, with a microscope having an objective lens that is commercially available at present as shown in Fig. 4, even when a cell which expresses luciferase gene in the cell and emits light, for example, is observed, it is impossible to observe the luminescence from that cell by visual inspection, and it is impossible to identify luminescence from cell by observation of a luminescent image captured with the use of a CCD camera cooled to about 0°C. In observation of a luminescent sample, projection of excitation light which is necessary for fluorescent observation is not required. For example, in epifluorescent observation, an objective lens acts both as an excitation light projecting leans and as a lens that collects fluorescent light to form an image.

To observe luminescence of weak luminescence intensity by image, an objective lens having large NA and small $\beta$ is required. As a result, such an objective lens will have a large diameter. In such an objective lens, it is required to simplify the design and production by simplifying functions without taking functions of excitation light projection into account.

Further, in research fields using luminescent or fluorescent observation, time lapse or capture of moving image is demanded for grasping dynamic function expression of protein molecule in a sample. In recent years, observation of a moving image of a single protein molecule using fluorescence is conducted. In such imaging, the larger the number of imaged frames in a unit time, the shorter the exposure time for one frame of image. In such observation, a bright optical system, in particular, bright objective lens is required. However, since the luminescence intensity of luminescent protein is weaker than the case of fluorescence, an exposure time of e.g., 20 minutes is often required for capturing one frame of image. Only a sample in which dynamic change is very slow can be subjected to time lapse observation in such an exposure time. For example, in the cells that duplicate roughly once an hour, it is impossible to observe change occurring within the cycle. Therefore, to efficiently generate an image of weak luminescence intensity while keeping the signal to noise ratio high, it is important to improve the brightness of the optical system.

The objective lens manufactured while taking the above circumstances into account has larger NA and smaller $\beta$ compared with a commercially available objective lens (see Fig. 4, for example). Therefore, $NA'^2$ of the objective lens has a large value. In other words, the objective lens is referable to a bright objective lens. Accordingly, by using a bright objective lens like the objective lens, it is possible to observe luminescence from a luminescent sample of weak luminescence intensity by an image. Further, by attaching the objective lens having larger numerical aperture to a stereoscopic microscope for observation of a darker image, it is possible to observe luminescence of cell by image even with a CCD camera cooled to about 0°C without attaching an image intensifier. Also a method of improving the sensitivity by a CCD camera that utilizes liquid nitrogen cooling is known, however, such a CCD camera is very expensive and bulky. Additionally, simply improving the sensitivity will lead increase in foreign noises, so that measurement at high S/N ratio is difficult. However, by using the objective lens, it is possible to observe luminescence of cell by image even with a CCD camera utilizing Pertie cooling, and thus it is possible to accurately measure luminescence without causing decrease in S/N ratio due to foreign noises (for example, cosmic ray). Additionally, the objective lens has a large diameter of, e.g., about 5 to 10 cm. Consequently, it is possible to image a moving luminescent sample which is otherwise never subjected to imaging, or a luminescent sample distributing in a wide range, for example, in a range corresponding to a diameter of 5 to 50 mm, preferably, in a range corresponding to a diameter of 10 to 30 mm. Such wide observation range may be arbitrarily controlled by magnification of objective lens or zooming mechanism.

The method of the present invention and the apparatus may be provided in the form of software for controlling or coordinating an essential apparatus configuration, or in the form of a computer program that characterizes the software. Additionally, by electrically connecting the method of the present invention or the apparatus with database which is integrally or separately arranged, it is possible to quickly provide an analytical result with high reliability and quality without being limited by image capacity or amount of analysis information.

Example 1

In the present Example 1, condition of $(NA/\beta)^2$ of the objective lens which allows observation of luminescence of HeLa cells into which luciferase gene is introduced by image was examined.

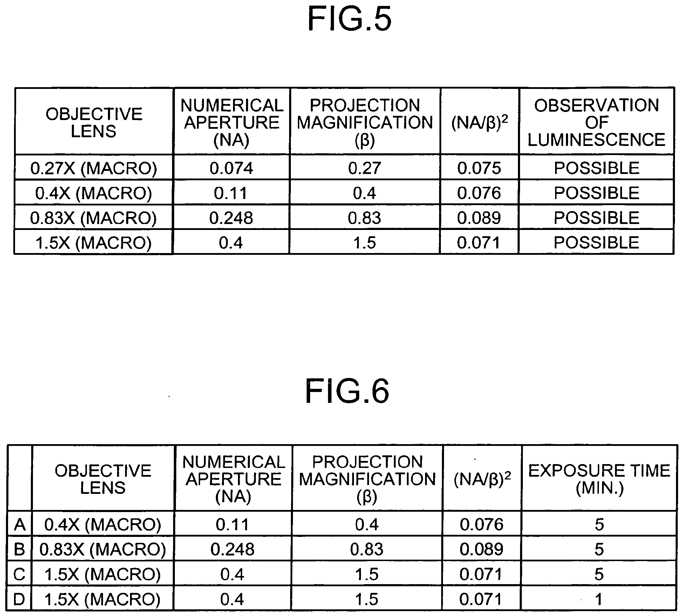

The subject to be imaged in the present Example 1 (sample 1 in the above embodiment) is HeLa cell transfected with firefly luciferase gene "pGL3 control vector" (Promega (company name)). Prior to observation of luminescent image of the HeLa cells, the HeLa cells were cultured for a day after transfection, and washed with Hank's balanced salt solution, followed by replacement by Hank's balanced salt solution containing 1 mM luciferin. Conditions of numerical aperture(NA) and projection magnification $(\beta)$ in the objective lens used in the present Example 1 (objective lens 2 in the embodiment described above) are as shown in Fig. 5. Fig. 5 is a view depicting conditions of numerical aperture(NA) and projection magnification $(\beta)$ in the objective lens used in Example 1. As shown in Fig. 5, numerical aperture(NA) of the objective lens is a value ranging from 0.074 to 0.4, and $\beta$ of the objective lens is a value ranging from 0.27 to 1.5. The CCD camera used in the present Example 1 (CCD camera 4 in the embodiment as described above) is a cooling CCD camera of 0°C, and has specification including number of pixels of the CCD camera of 765×510, pixel size of 9 $\mu$m × 9 $\mu$m, tip area of 6.89×4.59(mm$^2$), and quantum efficiency of 55% at 550nm. In the present Example 1, imaging of the HeLa cells was conducted while the entire apparatus in use (see Fig. 1, for example) was covered with blackout curtain.

In the present Example 1, it was demonstrated that luminescent image can be observed in any examined conditions of $(NA/\beta)^2$ as shown in Fig. 5. This demonstrates that a luminescent image of HeLa cells into which luciferase gene is introduced can be observed by using an objective lens having a $(NA/\beta)^2$ of equal to or more than 0.071.

Example 2

In the present Example 2, condition of $(NA/\beta)^2$ of objective lens which allows observation of luminescence of HeLa cells into which luciferase gene is introduced by image was examined with different exposure times.

The subject to be imaged in the present Example 2 is as same as that in the above Example 1. Conditions of numerical aperture(NA) and projection magnification $(\beta)$ of the objective lens used in the present Example 2 are as shown in Fig. 6. Fig. 6 is a view depicting conditions of numerical aperture(NA) and projection magnification $(\beta)$ of the objective lens used in Example 2. The objective lens used in the present Example 2 corresponds to "0.4X", "0.83X", and "1.5X" described in Fig. 5 in the above Example 1. The CCD camera used in the present Example 2 is as same as that used in Example 1. And exposure time is 1 minute or 5 minutes as shown in Fig. 6. Likewise Example 1, also in the present Example 2, imaging of luminescent image of the HeLa cells was conducted while the entire apparatus in use was covered with blackout curtain.

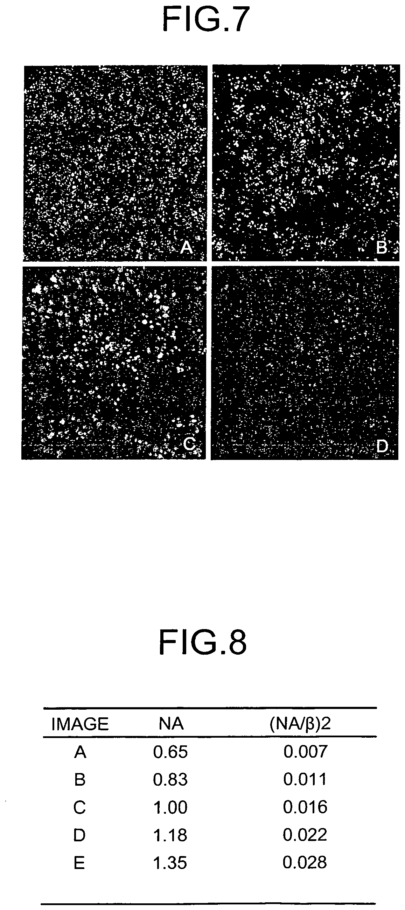

In the present Example 2, as shown in Fig. 7, a luminescent image can be observed in any of image A captured using the objective lens of "0.4X" with 5-minutes exposure time, image B captured using the objective lens of "0.83X" with 5-minutes exposure time, image C captured using the objective lens of "1.5X" with 5-minutes exposure time, and image D captured using the objective lens of "1.5X" with 1-minute exposure time. This demonstrates that when an objective lens having a $(NA/\beta)^2$ of equal to or more than 0.071 is used, a luminescent image of HeLa cells into which luciferase gene is introduced can be observed even with exposure time of 1 minute.

Example 3

In the present Example 3, condition of $(NA/\beta)^2$ of objective lens which allows observation of luminescence of HeLa cells into which luciferase gene is introduced by image was examined with higher magnification.

The subject to be imaged is as same as that in Example 1 or Example 2 as described above. The objective lens used in the present Example 3 is "UApo40X Oil Iris" available form OLYMPUS®. Condition of numerical aperture(NA) the objective lens was as shown in Fig. 8, and each numerical aperture(NA) was set by varying the diaphragm ring of the objective lens. Fig. 8 is a view depicting condition of numerical aperture(NA) of the objective lens used in Example 3. As shown in Fig. 8, the numerical aperture(NA) has a value ranging from 0.65 to 1.35. And projection magnifications $(\beta)$ of the objective lenses (A-E) were set at eight times by a condenser lens. Therefore, as shown in Fig. 8, values of $(NA/\beta)^2$ of objective lens varies between 0.007 and 0.028. Further, the CCD camera used in the present Example 3 is "DP30BW" available from OLYMPUS®, which operates at a temperature of 5°C, and has pixel number of 1360×1024, pixel size of 6 $\mu$m × 6 $\mu$m, and tip area (mm$^2$) of 13.8×9.18. And exposure time is 2 minutes. Likewise the above Example 1 and Example 2, also in the present Example 3, imaging of the HeLa cells was conducted while the entire apparatus in use was covered with blackout curtain.

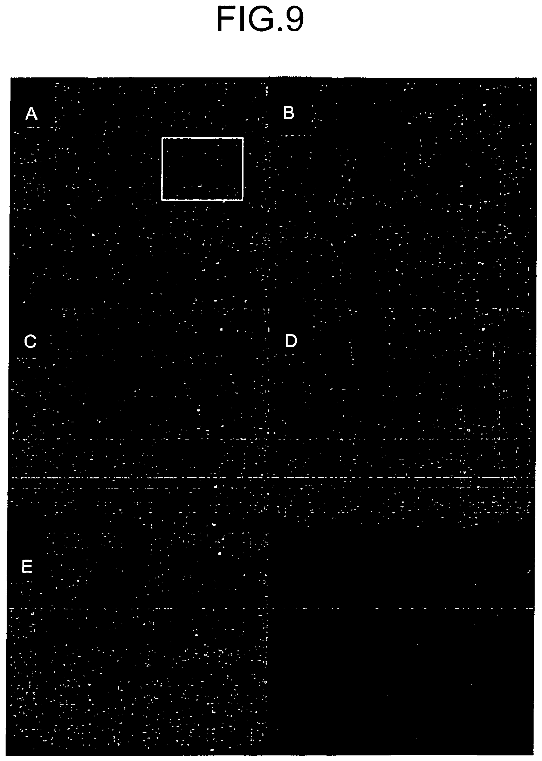

In the present Example 3, as shown in Fig. 9, luminescence of HeLa cells were easily identified for images B to E which were imaged by the objective lenses having NA ranging from 0.83 to 1.35. In other words, luminescence was easily observed for the images B to E in Fig. 9. On the other hand, as to the image A captured by the objective lens having a NA of 0.65, it was difficult to quantitatively identify the luminescence. Images shown in Fig. 9 were captured while NA was varied stepwise from 0.65 to 1.35 by changing the diaphragm position of the ×40 objective lens ("UApo40X Oil Iris" available from OLYMPUS®). As a result, it wad demonstrated that a luminescent image of HeLa cells into which luciferase gene is introduced can be observed as far as the value of $(NA/\beta)^2$ is equal to or more than 0.01 when exposure time is 2 minutes.

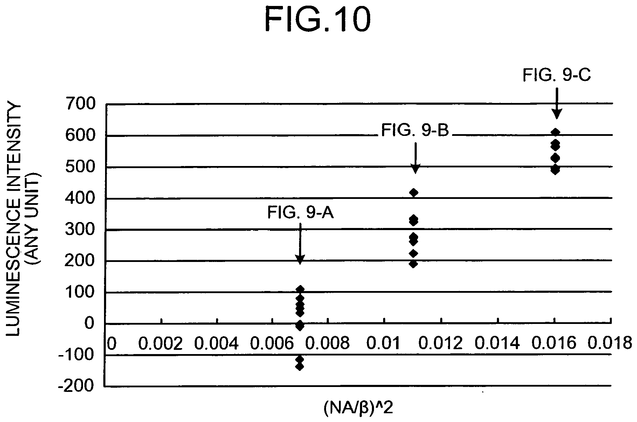

Then we examined the condition of $(NA/\beta)^2$ of the objective lens, which is suited for observation of luminescent image of cell from the relationship between value of $(NA/\beta)^2$ of the objective lens used in Example 3 (shown in Fig. 8) and luminescence intensity of images (image A, image B, and image C) shown in Fig. 9 (see Fig. 10). Fig. 10 is a plot of luminescence intensity of image shown in Fig. 9 (image A, image B and image C), with respect to value of $(NA/\beta)^2$ of objective lens represented on the horizontal axis. Luminescence intensity is determined by subtracting from luminescence intensity (output value of CCD camera) of an entire defined region including parts which are bright because of luminescence (see, for example, the region indicated by a square in image A of Fig. 9), luminescence intensity (output value of CCD camera) of the entire region not including parts which are bright because of luminescence (or region including parts which are dark because of absence of luminescence) and having an equivalent area as the defined region.

As shown in Fig. 10, it can be quantitatively detected that there is a significant difference between luminescence intensity of image A and luminescence intensity of image B in Fig. 9, and that there is a significant difference between luminescence intensity of image B and luminescence intensity of image C in Fig. 9 according to fluctuation in luminescence intensity among images (within the range which luminescence intensity of image can fall). Further, in Fig. 10, since luminescence intensity of image A in Fig. 9 includes negative values, it can be understood that image A of Fig. 9 is not suited for observation of luminescent image. The above examinations demonstrated that observation of luminescent image of cell can be sufficiently and reliably conducted when value of $(NA/\beta)^2$ of the objective lens is equal to or more than 0.01. That is, it was demonstrated that value of $(NA/\beta)^2$ of the objective lens which is suited for observation of luminescent image of cell is equal to or more than 0.01.

INDUSTRIAL APPLICABILITY

As described above, the luminescent sample imaging method according to the present invention may be suitably used, for example, in analysis of promoter or enhancer that controls gene expression using luminescent gene such as luciferase as a reporter gene, or in reporter assay for examining effects of effecter gene such as transcription factor or various drugs.

**Claims**

**1.**    A luminescent sample imaging method comprising:

imaging a luminescent sample (1) using an objective lens (2) having a value of $(NA \div \beta)^2$ represented by numerical aperture NA and projection magnification $\beta$ of equal to or more than 0.01;
**characterized in that** the magnification $\beta$ of the objective lens (2) is within the range of 5x to 20x or 40x to 100x, wherein the luminescent sample (1) is an individual luminescent cell into which luciferase gene is introduced.

**2.**    The luminescent sample imaging method according to claim 1, wherein the luminescent sample (1) is a living cell.

**Patentansprüche**

**1.**    Abbildungsverfahren für lumineszierende Proben, umfassend:

Abbilden einer lumineszierenden Probe (1) unter Verwendung einer Objektivlinse (2) mit einem Wert von $(NA : \beta)^2$, der durch eine numerische Apertur NA und eine Projektionsvergrößerung $\beta$ dargestellt wird, von größer gleich 0,01;
**dadurch gekennzeichnet, dass** die Vergrößerung $\beta$ der Objektivlinse (2) innerhalb des Bereichs von 5X bis 20X oder 40X bis 100X liegt, wobei die lumineszierende Probe (1) eine einzelne lumineszierende Zelle ist, in die Luciferase-Gen eingeführt ist.

**2.**    Abbildungsverfahren für lumineszierende Proben nach Anspruch 1, wobei die lumineszierende Probe (1) eine lebende Zelle ist.

**EP 1 816 503 B1**

**Revendications**

1. Procédé d'imagerie d'échantillon luminescent comprenant :

   imager un échantillon luminescent (1) l'aide d'un objectif (2) ayant une valeur de $(NA+\beta)^2$, représentée par l'ouverture numérique NA et le grossissement de projection $\beta$, égale ou supérieure à 0,01 ;
   **caractérisé par le fait que** le grossissement $\beta$ de l'objectif (2) se situe dans la plage de 5x à 20x ou de 40x à 100x, l'échantillon luminescent (1) étant une cellule luminescente individuelle dans laquelle le gène de la luciférase est introduit.

2. Procédé d'imagerie d'échantillon luminescent selon la revendication 1, dans lequel l'échantillon luminescent (1) est une cellule vivante.

# FIG.1

# FIG.2

(CONVENTIONAL)

PlanApo
100×/1.40 oil
∞/0.17

2

(INVENTIVE)

PlanApo
100×/1.40 oil
∞/0.17
$(NA/\beta)^2 : 0.05$

# FIG.3

# FIG.4

| OBJECTIVE LENS | NUMERICAL APERTURE (NA) | PROJECTION MAGNIFICATION (β) | $(NA/β)^2$ | OBSERVATION OF LUMINESCENCE |
|---|---|---|---|---|
| 1X (MACRO) | 0.04 | 1.26 (MACRO ZOOM) | 0.001 | IMPOSSIBLE |
| 1X (MACRO) | 0.5 | 12.6 (MACRO ZOOM) | 0.002 | IMPOSSIBLE |
| 10X | 0.4 | 10 | 0.0016 | IMPOSSIBLE |
| 20X | 0.6 | 20 | 0.0009 | IMPOSSIBLE |
| 40X | 0.9 | 40 | 0.0005 | IMPOSSIBLE |
| 60X | 1.4 | 60 | 0.0005 | IMPOSSIBLE |

# FIG.5

| OBJECTIVE LENS | NUMERICAL APERTURE (NA) | PROJECTION MAGNIFICATION (β) | $(NA/β)^2$ | OBSERVATION OF LUMINESCENCE |
|---|---|---|---|---|
| 0.27X (MACRO) | 0.074 | 0.27 | 0.075 | POSSIBLE |
| 0.4X (MACRO) | 0.11 | 0.4 | 0.076 | POSSIBLE |
| 0.83X (MACRO) | 0.248 | 0.83 | 0.089 | POSSIBLE |
| 1.5X (MACRO) | 0.4 | 1.5 | 0.071 | POSSIBLE |

# FIG.6

| | OBJECTIVE LENS | NUMERICAL APERTURE (NA) | PROJECTION MAGNIFICATION (β) | $(NA/β)^2$ | EXPOSURE TIME (MIN.) |
|---|---|---|---|---|---|
| A | 0.4X (MACRO) | 0.11 | 0.4 | 0.076 | 5 |
| B | 0.83X (MACRO) | 0.248 | 0.83 | 0.089 | 5 |
| C | 1.5X (MACRO) | 0.4 | 1.5 | 0.071 | 5 |
| D | 1.5X (MACRO) | 0.4 | 1.5 | 0.071 | 1 |

# FIG.7

# FIG.8

| IMAGE | NA | (NA/β)2 |
|-------|------|---------|
| A | 0.65 | 0.007 |
| B | 0.83 | 0.011 |
| C | 1.00 | 0.016 |
| D | 1.18 | 0.022 |
| E | 1.35 | 0.028 |

FIG.9

# FIG.10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6441973 B
- JP 2002369690 A
- JP 2001021812 A